# EUROPEAN PATENT APPLICATION

(11) **EP 1 503 466 A1**
(43) Date of publication of application: **02.02.2005**
(21) Application number: 04253435.4
(22) Date of filing: 09.06.2004
(51) Int. Cl.: H01R 43/06

(54) **A method of fabricating a commutator for a motor**

(30) Priority: 29.07.2003 KR 2003052452
(71) Applicant: Samsung Gwangju Electronics Co., Ltd., Gwangju-city (KR)
(72) Inventor: Cheon-Mu, Lee, Gwangsan-gu Gwangju-city (KR)
(74) Representative: Wilson Gunn M'Caw

(57) **Abstract**

A method of fabricating a commutator for a motor comprises the steps of: drawing a bar into the shape of a plate; forming plural commutator segments having a predetermined size by cutting the plate at appropriate intervals; heat-processing the commutator segments with liquefied nitrogen; inserting the heat-processed commutator segments, and setting the commutator segments in a mold in a circular pattern having a predetermined gap from one another for receiving insulating resin, and inserting a bushing in a central position of the circular pattern of commutator segments; forming an insulating resin layer in the gaps between the commutator segments by extruding or injecting an insulating resin into the mold; and finishing an inner diameter and an outer diameter of the fabricated commutator.

## Description

### BACKGROUND OF THE INVENTION

### Field of the Invention

The present invention relates generally a method of fabricating a commutator for a motor, and more particularly, to a method of fabricating a commutator for a motor, which is capable of preventing a commutator from being extremely abraded due to a friction brush and also having an improved abrasion resistance.

### Description of the Background Art

Generally, a commutator for a motor includes plural commutator segments arranged in a motor having a ring pattern, an insulating resin for insulating each commutator segment from other adjacent segments, and a bushing. The commutator segments are usually made of 100% cupper (Cu), and the bushing is centrally disposed in respect of the insulating resin so as to allow a shaft of a rotator to be inserted thereinto.

A segment type motor commutator fabrication method is widely used for fabricating commutators for motors. According to the segment type motor commutator fabrication method, a plurality of commutator segments are arranged in a mold in a circular pattern and insulating material is molded among the respective commutator segments. The fabrication methods for manufacturing a conventional segment type motor commutator are divided, according to the installation or fabrication methods of the insulating material, into a Mica clamping method, in which the commutators are clamped using Mica, and a resin molding method, in which either a resin injection or extrusion is used. With the Mica clamping method, strips of Mica are inserted and clamped between each commutator segment and bushing one by one, which makes the fabrication process of the commutator quite complicated and inconvenient. Accordingly, this method is rarely used except in cases of large-sized motors.

With the resin molding method, which has been developed to compensate for the inconvenient disadvantages of the Mica clamping method described above, and also to simplify the fabrication process, the resin molding method has been developed. In this method, a plurality of commutator segments are formed by drawing and cutting a bar and inserted in a mold, the commutator segments are aligned in a circular pattern separated by a predetermined gap for receiving insulating resin by molding of insulating resin therebetween, and a bushing is inserted into the central portion. Then, an insulating resin layer is formed in the gaps between the respective commutator segments by extruding or injecting the insulating resin, such as phenol resin, and an outer circumference of the insulating resin layer is processed by turning or grinding. If necessary, a coil connecting piece is formed by performing a slotting process with respect to a non-cutting portion remaining in a predetermined end portion of the insulating resin layer.

Hereinbelow, the conventional commutator fabrication method will be described step by step.

The conventional commutator fabrication method includes the steps of drawing a circle-shaped copper coil into a plate, cutting the plate into separate commutator segments, in accordance with predetermined requirements, washing the commutator segments using a mixed washer solution consisting of an abluent (a cleansing agent), water and lactic acid, arranging the commutator segments on a jig in a circular pattern used to mold the commutator segments, inserting a bushing into the center of the commutator segments to obtain a space in which a shaft of a rotor may be disposed, molding to form an insulating member by fusing a synthetic resin, such as a phenol resin, onto the jig where the commutator segments and the bushing are disposed, turning the resulting construction such that the inner diameter of the shaft of the rotor is assembled with the bushing of the cylinder shaped commutator, and processing the outer diameter of the commutator according to the desired final size.

When the commutator fabricated by the above-described method is employed in a motor, there segment abrasion caused by friction occurs between a carbon brush and the commutator, and the segment abrasion causes the carbon brush to be rapidly abraded. Moreover, the heat caused by the abrasion of the carbon brush causes particles of the commutator segment to become disconnected, which may create problems to the smooth functioning of the motor.

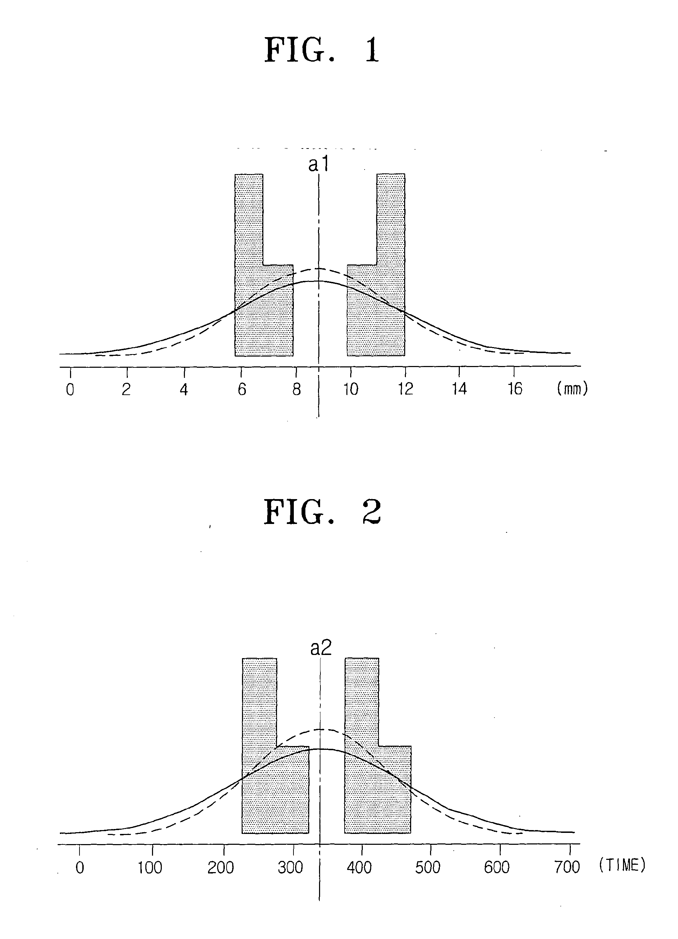

FIG. 1 is a graph showing the distribution of amount of abrasion that is obtained as a result of an experiment performed with respect to the commutator fabricated by the conventional commutator fabrication method.

As shown in FIG. 1, the amount of abrasion of the brush, which is electrically connected with the conventional commutator, is distributed ranging from 2 mm to 16 mm with a standard deviation of 2.54 mm. The average quantity of the abrasion (a1) is 8. 4 mm, which indicates an extreme amount of abrasion.

Also, after a long period of use, a motor tends to develop cracks in the synthetic resin molded with the commutator segments and the insulating material. Accordingly, the mechanical performance of the motor deteriorates, and may result in sparking or ring fire between the carbon brush and the commutator segments, thereby damaging the coating of the coil and causing defects by carbonization or burning.

Furthermore, if occurrence of ring fire carbonizes the commutator segments, the commutator becomes unusable, since it cannot make contact between the commutator segments and the brush.

FIG. 2 is a graph showing a lifespan of the conventional commutator, which has been obtained as a result of an experiment. As shown in FIG. 2, the average lifespan of the commutator is widely distributed from at least 100 hours to at most 650 hours, and the average lifespan (a2) is 341 hours, as shown.

As described above, the commutator fabricated by the conventional method has a short lifespan because of the abrasion of the brush and the ring fire caused by sparking, which may cause defects as a result of charring, carbonization or burning.

### SUMMARY OF THE INVENTION

The present invention has been developed in order to solve the above mentioned problems. Accordingly, it is an aspect of the present invention to provide a method of fabricating a commutator for a motor, which has improved durability and abrasion resistance, and is capable of preventing commutator segments from being carbonized even if a motor is used for a long time, and which method may also extends the lifespan of the commutator.

The above aspect is achieved by providing a method of fabricating a commutator for a motor. The method comprises the steps of: drawing a bar into a plate; forming plural commutator segments having a predetermined size by cutting the plate at appropriate intervals; heat-processing the commutator segments with liquefied nitrogen; inserting the heat-processed commutator segments in a mold, and setting the commutator segment in a mold in a circular pattern having a predetermined gap from one another, the gaps providing for the disposition of insulating resin, and inserting a bushing into a central portion of the circular arrangement of the commutator segments; forming an insulating resin layer by extruding or injecting an insulating resin into the mold; and finishing an inner diameter and an outer diameter of the fabricated commutator. According to this method, a coating is formed on the exterior of each commutator segment, thereby improving the durability and the abrasion resistance.

In one embodiment, the heat-processing of the commutator segments may be performed in a manner such that the commutator is dipped into the liquefied nitrogen from about 15 minutes to about 25 minutes. Since the temperature of liquefied nitrogen is generally blow -190°C, perhaps more preferably, the heat processing may take approximately 20 minutes.

The drawing processing step may use a bar made of a copper containing a silver (Ag) in the range from about 0.01% to about 2.0%. Consequently, the possibility of occurrence of sparking or ring fire can be reduced.

The method of fabricating the commutator as described above improves the durability and abrasion resistance of the commutator through the liquefied nitrogen heat-processing step.

Also, according to the method, the quantity of abrasion of the brush, which is caused by the contact of the rotating commutator with the brush, can be reduced, and the reduction of the possibility of ring fire can be achieved.

Also, the method of the present invention prevents the commutator segments from being carbonized, and increases the life span of the commutator.

### BRIEF DESCRIPTION OF THE DRAWINGS

The above aspect and other advantages of the present invention will be made more apparent by describing an exemplary embodiment of the present invention, in which:
FIG. 1 is a graph showing the distribution of the amount of abrasion of a brush, obtained as a result of an experiment on a commutator made by a conventional method;
FIG. 2 is a graph showing a lifespan of the commutator fabricated according to the conventional method, the graph data being obtained as a result of an experiment;
FIG. 3 is a block diagram showing a method of fabricating a commutator for a motor according to an embodiment of the present invention;
FIG. 4 is a graph showing the amount abrasion of the brush, obtained as a result of an experiment performed using the commutator fabricated by the method according to an embodiment of the present invention; and
FIG. 5 is a graph showing the average lifespan of the commutator fabricated by the method according to an embodiment of the present invention, the graph data being obtained as a result of an experiment.

### DETAILED DESCRIPTION OF THE EXEMPLARY EMBODIMENTS

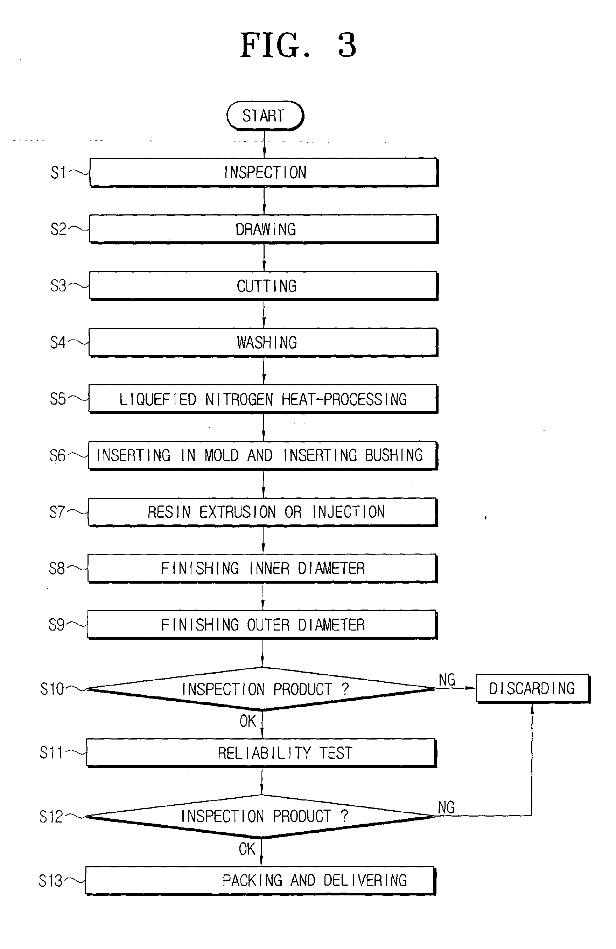

FIG. 3 is a block diagram of a flowchart showing a step-by-step method of fabricating a commutator for a motor according to an embodiment of the present invention. As shown in FIG. 3, an inspection step (S1) is performed with respect to a circle-shaped copper bar. The bar may use a pure copper wire, and perhaps more preferably, it may use an alloy also comprising silver (Ag) addition ranging from 0.01% at least to 2% by weight at most.

Next, a drawing step (S2) is performed with respect to the circle-shaped bar to form a segment having a desired thickness.

The segment formed by the drawing step (S3) is cut to a predetermined size to form a commutator segment.

The commutator segment is then washed (S4) by using a mixed solution consisting of an abluent, water, and lactic acid.

After being washed, the commutator segment is deposited into liquefied nitrogen for a predetermined time ranging from 15 minutes to 25 minutes (S5). In one example, the temperature of the liquefied nitrogen may be, or substantially be approximately -198°C. During the deposition step (S5), the washed commutator segments are rapidly refrigerated to form a nitrogen coating on the surface thereof, and then the resulting construction of the commutator segments is heated. The heat processing may take approximately 20 minutes.

After being heated, the commutator segments are arranged within a mold in a circular pattern at a predetermined interval, and a bushing is inserted at a central portion of the circular arrangement of the commutator segments so that a shaft of a rotor can be inserted therein (S6).

Insulating material of a synthetic resin is molded in step (S7) between the respective commutator segments and between each commutator segment and the bushing that was previously inserted. Accordingly, the commutator segments are insulated from each other, and from the bushing.

The inner diameter of the bushing is finished so that the shaft of the rotor can be inserted into the commutator (S8), and the outer diameter of the commutator is finished (S9) to meet the size requirement of the desired final product. Accordingly, the commutator is completed.

The completed commutator for the motor is discarded if it has any defects found during an inspection step (S10) of the commutators. Reliability tests are performed (S11) with respect to those commutators that have passed through the previous inspection step (S11). A second inspection step (S12) of the completed products is performed, and if the products pass the second inspection, the commutator is packed and delivered (S13).

The method of fabricating the commutator for a motor as described above improves the durability and the abrasion resistance, and increases the lifespan of the commutator. Also, the method can inhibit carbonization of the commutator segments during use.

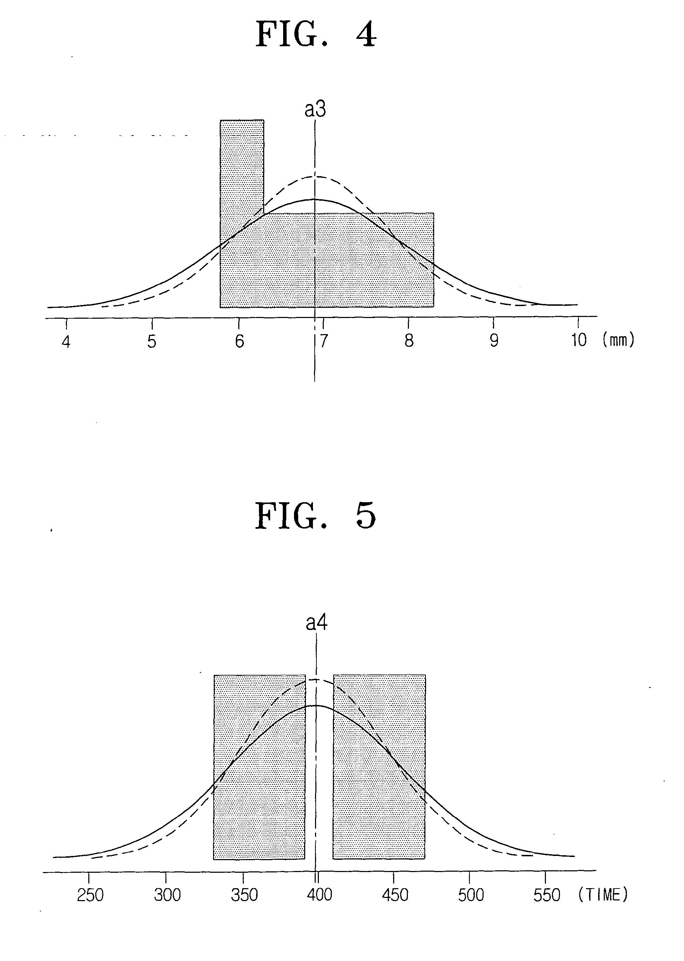

FIGS. 4 and 5 are graphs showing the data obtained as a result of an experiment performed with respect to commutators fabricated according to an embodiment of the present invention.

FIG. 4 shows the amount of abrasion of the brush, which is measured after the commutator fabricated according to the present invention is employed in a motor for a period of time. As shown in FIG. 4, the standard deviation is 0.87 mm, which is quite low compared to that of conventional brushes and commutators. The average amount of abrasion of the brush is 6.8 mm (a3), which is also greatly reduced when compared to conventional commutators.

FIG. 5 is a graph showing the lifespan of the commutator fabricated according to the present invention, which is obtained from data generated in the experiment. The graph shown in FIG. 5 shows that scattered data points are concentrated in the center and that the standard deviation is 50 hours. The average lifespan is 398 hours, which is significantly higher when compared to that of conventional commutators.

While the embodiments of the present invention have been shown and described with reference to the preferred embodiments of the fabrication method thereof in order to illustrate the principles of the present invention, the present invention is not limited to the illustrated and described embodiments. It will be understood that various modifications and changes can be made by those skilled in the art without departing from the spirit and scope of the invention as defined by the appended claims. Therefore, it shall be considered that such modifications, changes and equivalents thereof are all included within the scope of the present invention, as defined by the following claims.

## Claims

1. A method of fabricating a commutator for a motor, comprising the steps of:
drawing a bar into a plate;
forming a plurality of commutator segments having a predetermined size by cutting the plate at appropriate intervals;
heat-processing the commutator segments with liquefied nitrogen;
inserting the heat-processed commutator segments and setting the commutator segments in a mold in a circular pattern having a predetermined gap from one another, the gaps providing for the disposition of insulating resin, and inserting a bushing to a central portion of the commutator segments;
forming an insulating resin layer in the gaps between the commutator segments by extruding or injecting an insulating resin into the mold; and
finishing an inner diameter and an outer diameter of the fabricated commutator.

2. The method as claimed in claim 1, wherein the heat-processing of the commutator segments is performed by dipping the commutator into the liquefied nitrogen for approximately 15 minutes to 25 minutes.

3. The method as claimed in claim 1 or 2, wherein the drawing processing step uses a bar made of a copper blank containing silver (Ag) in the range from approximately 0.01% to 2.0% by weight.
